# EUROPÄISCHE PATENTANMELDUNG

(11) **EP 3 211 202 A1**
(43) Veröffentlichungstag der Anmeldung: **30.08.2017**
(21) Anmeldenummer: 17155869.5
(22) Anmeldetag: 13.02.2017
(51) Int. Cl.: F02D 41/28, F02D 35/02

(54) **MOTORSTEUERSYSTEM FÜR EINE BRENNKRAFTMASCHINE**

(30) Priorität: 23.02.2016 DE 102016202770
(71) Anmelder: Mahle International GmbH, 70376 Stuttgart (DE)
(72) Erfinder: BEERENS, Christoph, 70193 Stuttgart (DE)
(74) Vertreter: BRP Renaud & Partner mbB Rechtsanwälte Patentanwälte Steuerberater

(57) **Zusammenfassung**

Die Erfindung betrifft ein Motorsteuersystem (1) für eine Brennkraftmaschine (2) mit zumindest folgenden Komponenten:
• - zumindest ein Energieerntemodul (4) mit zumindest einem Energieumwandler (5) und zumindest einem Energiemodul (6),
• - zumindest einen Sensor (7) zum Erfassen einer physikalischen oder chemischen Messgröße an oder in einer Motorkomponente (13) der Brennkraftmaschine (2), einen Mikrocontroller (8) zum Verarbeiten der erfassten Messgröße und ein Funkmodul (9) zur drahtlosen Übertragung der von dem Mikrocontroller (8) verarbeiteten Messgröße an einen Funkempfänger (10),
• - wobei der Mikrocontroller (8) mit dem Sensor (7) und dem Funkmodul (9) kommunizierend verbunden ist und wobei das Energiemodul (6) zur Übertragung von elektrischer Energie zumindest mit dem Mikrocontroller (8) und dem Funkmodul (9) verbunden ist,
• - ein Motorsteuergerät (11), das mit dem Funkempfänger (10) kommunizierend verbunden und derart ausgebildet ist, dass es vom Funkempfänger (10) eingehende Messgrößen auswertet, zu Steuersignalen verarbeitet und diese zum Schutz der Motorkomponente (13) an die Brennkraftmaschine (2) überträgt.
.

## Beschreibung

Die vorliegende Erfindung betrifft ein Motorsteuersystem für eine Brennkraftmaschine gemäß dem Oberbegriff des Anspruchs 1. Die Erfindung betrifft außerdem eine Brennkraftmaschine mit einem solchen Motorsteuersystem sowie ein Verfahren zur Steuerung einer Brennkraftmaschine unter Zuhilfenahme eines derartigen Motorsteuersystems.

Unter Motorsteuersystem wird üblicherweise ein Motorsteuergerät (Elektronic Control Unit, ECU) subsummiert, welches die Steuerung, Regelung und Überwachung von Funktionen einer Brennkraftmaschine in Abhängigkeit von von Sensoren ermittelten Messgrößen, die in dem Motorsteuergerät ausgewertet und verarbeitet werden, übernimmt. Bei modernen Motorsteuersystemen kommen hierfür leistungsfähige, digitale Mikroprozessoren oder Mikrocontroller zum Einsatz, die neben den internen Verbrennungsabläufen in der Brennkraftmaschine auch weitere, insbesondere darüber hinaus gehende Funktionen, steuern können. Hierunter fallen insbesondere eine Kraftstoffeinspritzung, eine Zündung, eine Ladedruckregelung, eine Regelung der Leerlaufdrehzahl sowie eine Ansteuerung einer Drosselklappe.

Üblicherweise benötigen die einzelnen Komponenten der Motorsteuersysteme zum Betrieb elektrische Energie, die über entsprechende Kabel von einem elektrischen Energiespeicher, beispielsweise einer Fahrzeugbatterie, zur Verfügung gestellt wird. Genau diese Verkabelung erweist sich jedoch bei immer kleiner werdenden Sensoren und dem Wunsch, auch interne Messgrößen einer Brennkraftmaschine zu erfassen, als zunehmend schwierig bzw. in manchen Teilen sogar unmöglich. Die bislang erforderliche Verkabelung erhöht dabei nicht nur einen Montageaufwand und damit indirekt die Fertigungskosten, sondern benötigt auch zusätzliches Material, wodurch die Materialkosten steigen. Darüber hinaus ist eine derartige Verkabelung, insbesondere von äußerst kleinen Sensoren eines Motorsteuersystems, aufgrund der in einem Motorraum eines Kraftfahrzeugs herrschenden Temperatur- und Feuchtebedingungen auch geschützt zu verlegen, woraus weitere Kosten resultieren.

Die vorliegende Erfindung beschäftigt sich daher mit dem Problem für ein Motorsteuergerät der gattungsgemäßen Art eine verbesserte oder zumindest eine alternative Ausführungsform anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, erstmals keine externe Energieversorgung zur Versorgung von Teilen eines Motorsteuersystems mit elektrischer Energie zu verwenden, sondern von dem Prinzip des sogenannten "Energy harvesting" Gebrauch zu machen, bei welchem insbesondere kleinere Mengen an elektrischer Energie aus Quellen, wie beispielsweise einer Temperatur einer Brennkraftmaschine, Vibrationen oder Luftströmungen gewonnen werden. Durch ein derartiges Ernten der Energie von ohnehin energieabgebenden Komponenten, kann nicht nur der extern zur Verfügung zu stellende Energieaufwand gesenkt, sondern zudem auch ein bislang erforderlicher Verkabelungsaufwand signifikant reduziert werden, insbesondere dann, wenn zwischen einzelnen Komponenten des Motorsteuersystems zudem eine drahtlose Datenübertragung erfolgt. Das erfindungsgemäße Motorsteuersystem für eine Brennkraftmaschine besitzt dabei zumindest ein Energieerntemodul, welches zumindest einen Energieumwandler und zumindest ein Energiemodul umfasst. Ebenso weist das erfindungsgemäße Motorsteuersystem zumindest einen Sensor zum Erfassen einer physikalischen oder einer chemischen Messgröße an oder in einer Motorkomponente der Brennkraftmaschine, einen Mikrocontroller zum Verarbeiten der erfassten Messgröße sowie ein Funkmodul zur drahtlosen Übertragung der von dem Mikrocontroller verarbeiteten Messgrößen an einem Funkempfänger auf. Der Mikrocontroller und das Funkmodul können auch ein Bauteil sein, ein sogenanntes System-on-a-chip (SoC). Der Mikrocontroller ist dabei drahtgebunden sowohl mit dem Sensor als auch mit dem Funkmodul kommunizierend verbunden, wobei das Energiemodul zur Übertragung von elektrischer Energie zumindest mit dem Mikrocontroller und dem Funkmodul verbunden ist. Extern angeordnet ist ein Motorsteuergerät, welches mit dem Funkempfänger und mit zumindest der Brennkraftmaschine verbunden und zugleich derart ausgebildet ist, dass es vom Funkempfänger eingehende Messgrößen auswertet, zum Steuersignal verarbeitet und diese an die Brennkraftmaschine zur Steuerung derselben überträgt. Mit dem erfindungsgemäßen Motorsteuersystem ist es somit erstmals möglich, beispielsweise von der Brennkraftmaschine oder deren Komponenten abgestrahlte Wärme-, Bewegungs- oder Druckenergie mit Hilfe des Energieumwandlers in elektrische Energie umzuwandeln und darüber die elektrische Energieversorgung des Mikrocontrollers und des Funkmoduls und gegebenenfalls auch - soweit erforderlich - des Sensors zu übernehmen. Hierdurch kann insbesondere auf eine bislang aufwendige Verkabelung des Sensors mit beispielsweise eine Fahrzeugbatterie gänzlich verzichtet werden, wodurch auch eine autarke Anordnung des zumindest einen Sensors an bislang für eine kabelgebundene Anbindung nicht zugänglichen Stellen möglich ist. Das erfindungsgemäße Motorsteuersystems ermöglicht es somit erstmals nicht nur bislang nicht mittels elektrischer Kabel erschließbare Bauräume zum Anordnen von Sensoren zu erschließen, sondern auch den Wirkungsgrad der Brennkraftmaschine zu erhöhen, da für die elektrische Energieversorgung des Motorsteuersystems, insbesondere des Funkmoduls bzw. des Mikrocontrollers, erstmals Energie der Brennkraftmaschine genutzt wird, die bislang ungenutzt in die Umgebung abgegeben wurde. Dabei wird nicht die im Brennraum der Brennkraftmaschine erzeugte Energie genutzt, sondern vielmehr Vibrationen oder andere kinetische Energie, die bei der Bewegung der Brennkraftmaschine/ Motorkomponenten anfällt oder thermische Energie von anderen Motorkomponenten, wie beispielsweise einem Kühler, einem Kondensator, einem Abgasturbolader, einem Abgasstrang, etc..

Bei einer vorteilhaften Weiterbildung der erfindungsgemäßen Lösung ist der zumindest eine Sensor in einem Kolben, einem Pleuel, einem Ventil, einem Motorblock, insbesondere einer Zylinderwand des Motorblocks, einem Lager, einer Nocken- oder einer Kurbelwelle der Brennkraftmaschine angeordnet. Bereits diese nicht abschließende Aufzählung lässt erahnen, welch mannigfaltige neue Bauräume bzw. Anordnungsmöglichkeiten für derartige Sensoren des erfindungsgemäßen Motorsteuersystems möglich sind. Bei einer Anordnung eines derartigen Sensors in einem Pleuel können beispielsweise Druckkräfte des Kolbens erfasst werden.

Bei einer vorteilhaften Weiterbildung der erfindungsgemäßen Lösung ist der zumindest eine Sensor zur Erfassung einer Temperatur, einer Kraft und/oder eines Drucks ausgebildet. Diese ebenfalls nicht abschließende Aufzählung gibt eine groben Überblick darüber, welche Möglichkeiten zur Erfassung physikalischer und/der chemischer Größen mittels des zumindest einen Sensors möglich sind.

Bei einer weiteren vorteilhaften Ausführungsform der erfindungsgemäßen Lösung ist das Energiemodul zur Glättung einer von dem zumindest einen Energieumwandler empfangenen elektrischen Spannung ausgebildet. Da der Energieumwandler unter Umständen keine kontinuierliche Energielieferung, insbesondere keine gleichmäßige Spannung, erzeugen und übertragen kann, ist es zu einer zuverlässigen und insbesondere auch gleichbleibende Energieversorgung des Mikrocontrollers und/oder des Funkmoduls erforderlich, die von dem Energieumwandler eingehende elektrische Energie zu homogenisieren, insbesondere die elektrische Spannung zu glätten.

Zweckmäßig ist der Energieumwandler zur Umwandlung von Temperatur, Vibrationen, Strömungen, insbesondere Luftströmungen und/oder Druck in elektrische Energie ausgebildet. Dies ermöglicht eine nahezu grenzenlose Anordnungsmöglichkeit des Energieumwandlers an bzw. in der Brennkraftmaschine, beispielsweise im Bereich eines Motorblocks, an welchem der Energieumwandler die im Motorblock auftretende Wärmeenergie in elektrische Energie umwandelt und an das Energiemodul des Energieerntemoduls weiterleitet, welches die eingehende elektrische Spannung beispielsweise glättet und den Mikrocontroller und das Funkmodul mit elektrischer Energie versorgt. Hierbei kann der Energieumwandler beispielsweise als sogenanntes Peltierelement ausgebildet sein, das heißt als elektrothermischer Wandler, der basierend auf dem sogenannten Peltier-Effekt bei einer Temperaturdifferenz einen Stromfluss erzeugt. Rein theoretisch ist selbstverständlich auch denkbar, dass der Energieumwandler die am Motorblock oder am Pleuel auftretenden Vibrationen/Bewegungen in elektrische Energie umwandelt. Insgesamt kann hierdurch der Wirkungsgrad der Brennkraftmaschine verbessert werden.

Vorzugsweise wird bei der Energiegewinnung nicht direkt auf die im Brennraum vorhandene Energie zurückgegriffen. Diese soll ausschließlich zur Erzeugung der Antriebsleistung der Brennkraftmaschine verwendet werden. Das Energieernten soll vielmehr über kinetische Energie aus der Kinematik oder Dynamik der Brennkraftmaschine erfolgen. Beispielsweise könnte hierfür die Schwenkbewegung eines Pleuels genutzt werden, um über Piezo-Elemente elektrische Energie zu erzeugen. Auch kann thermische Energie, z.B. aus dem Kühlsystem, die nicht mehr zur Erzeugung von Antriebsleistung dient, zur Erzeugung elektrischer Energie verwendet werden. Beim Ernten von elektrischer Energie an einzelnen Motorkomponenten können diese bspw. auch gekühlt und dadurch vor temperaturbedingten Beschädigungen bewahrt werden.

Die vorliegende Erfindung beruht weiter auf dem allgemeinen Gedanken, ein Verfahren zur Steuerung einer Brennkraftmaschine anzugeben, bei welchem das zuvor beschriebene Motorsteuersystem zur Anwendung gelangt. Bei dem erfindungsgemäßen Verfahren werden zunächst mittels des zuvor beschriebenen Energieumwandlers eines Energieerntemoduls Wärme, Bewegungen, Vibrationen oder Ströme, beispielsweise Luftströme, der Brennkraftmaschine in elektrische Energie umgewandelt und an ein Energiemodul des Energieerntemoduls übertragen, welches seinerseits wiederum den Mikrocontroller und das Funkmodul mit elektrischer Energie versorgt und dadurch deren Betrieb ermöglicht. Mittels des zumindest einen Sensors wird zugleich eine physikalische oder chemische Messgröße der Brennkraftmaschine erfasst und an den Mikrocontroller übertragen, der die erfasste Messgröße verarbeitet und an das Funkmodul überträgt, welches die verarbeitete Messgröße drahtlos an einen extern angeordneten Funkempfänger überträgt, der die Messgröße wiederum an ein Motorsteuergerät weiterleitet. Dieses ebenfalls extern angeordnete Motorsteuergerät wertet die empfangene Messgröße aus, verarbeitet diese und erzeugt dadurch ein Steuersignal, welches es an die Brennkraftmaschine übermittelt wird und diese damit steuert. Hierdurch lässt sich beispielsweise eine Vorentflammung, beispielsweise durch einen Temperaturunterschiede oder Druck erfassenden Sensor detektieren und insbesondere geeignete Maßnahmen ergreifen, beispielsweise über eine Kraftstoffeinspritzung oder ähnliches zur Kühlung oder Gemischänderung. Darüber hinaus ist auch denkbar, dass mittels des zumindest einen Sensor Drücke bzw. Kräfte an einem Lager, beispielsweise an einer Pleuellagerstelle, abgegriffen werden, um dadurch eine Verbrennungssynchronisation und insbesondere einen gleichmäßigen Lauf der Brennkraftmaschine zu ermöglichen. Die Kräfte können dabei an allen Zylindern gemessen und z.B. die Einspritzmenge danach angepasst werden.

Bei einer vorteilhaften Weiterbildung der erfindungsgemäßen Lösung erfasst der zumindest einen Sensor, eine Temperatur, eine Kraft und/oder einen Druck. Diese nicht abschließende Aufzählung gibt bereits einen groben Überblick darüber, welche mannigfaltige Erfassungsmöglichkeit mittels des zumindest einen Sensors gegeben sind, wobei die erfassten chemischen und/oder physikalischen Parameter Rückschlüsse auf den Betrieb der Brennkraftmaschine zulassen. Insbesondere kann hierdurch beispielsweise eine Temperatur in einem Brennraum eines Zylinders, eine Kraft in einem Pleuel der Brennkraftmaschine und/oder ein Druck erfasst werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: ein erfindungsgemäßes Motorsteuersystem für eine Brennkraftmaschine, insbesondere eines Kraftfahrzeugs,
- Fig. 2: eine Detaildarstellung des Motorsteuersystems gemäß der Fig. 1.

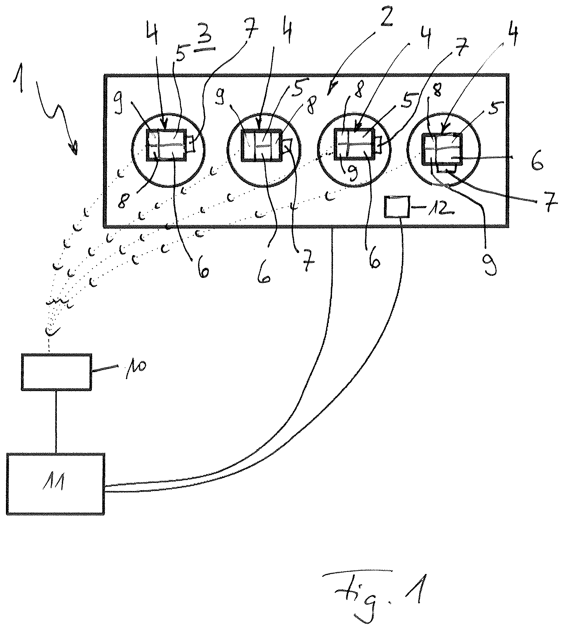

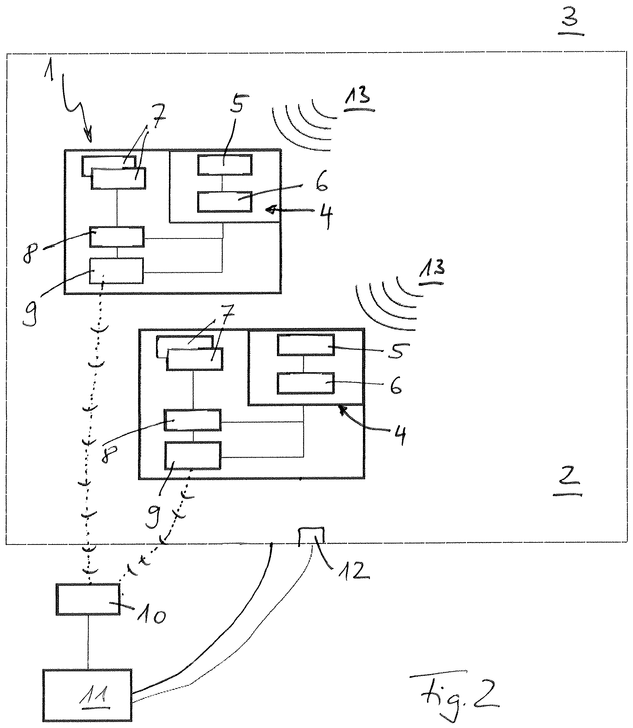

Entsprechend den Fig. 1 und 2, weist ein erfindungsgemäßes Motorsteuersystem 1 für eine Brennkraftmaschine 2, insbesondere in einem Kraftfahrzeug 3 zumindest ein Energieerntemodul 4 auf, das zumindest einen Energieumwandler 5 und zumindest ein Energiemodul 6 besitzt (vgl. Fig. 2). Ebenfalls vorgesehen ist zumindest ein Sensor 7, gemäß den Fig. 2 auch jeweils zwei Sensoren 7 zum Erfassen einer physikalischen oder einer chemischen Messgröße an oder in einer (Motor-)Komponente 13 der Brennkraftmaschine 2, ein Mikrocontroller 8 zum Verarbeiten der erfassten Messgröße sowie ein Funkmodul 9 zur drahtlosen Übertragung der vom Mikrocontroller 8 verarbeiteten Messgröße(n) an einen externen Funkempfänger 10. Gemäß den Fig. 1 und 2 sind dabei drahtlose Übertragungswege mit punktierter, das heißt unterbrochener, Linie dargestellt, während drahtgebundene Übertragungswege sowohl für Daten als auch auf für Energie mit durchgezogener Linie dargestellt sind. Dabei wird nicht die im Brennraum der Brennkraftmaschine 2 erzeugte Energie genutzt, sondern vielmehr Vibrationen oder andere kinetische Energie, die bei der Bewegung oder beim Betrieb der Motorkomponenten 13 anfällt oder thermische Energie von anderen Motorkomponenten 13, wie beispielsweise einem Kühler, einem Kondensator, einem Abgasturbolader, einem Abgasstrang, etc.. Des Weiteren ist bei dem erfindungsgemäßen Motorsteuersystem 1 der Mikrocontroller 8 kommunizierend mit dem zumindest einen Sensor 7, gemäß der Fig. 2 mit den beiden Sensoren 7, und dem Funkmodul 9 verbunden, wobei das Energiemodul 6 des Energieerntemoduls 4 zur Übertragung von elektrischer Energie zumindest mit dem Mikrocontroller 8 und dem zugehörigen Funkmodul 9 verbunden ist. Extern angeordnet ist ein Motorsteuergerät 11, das mit dem Funkempfänger 10 verbunden und zugleich derart ausgebildet ist, dass es vom Funkempfänger 10 eingehende Messgrößen auswertet, zu Steuersignalen verarbeitet und diese an die Brennkraftmaschine 2 zur Steuerung derselben bzw. an die Motorkomponenten 13 zum Schutz derselben überträgt.

Darüber hinaus kann ein weiterer Sensor 12 vorgesehen sein, der drahtgebunden mit dem Motorsteuergerät 11 verbunden, insbesondere in dessen Nähe an der Brennkraftmaschine 2 angeordnet ist und weitere Messgrößen zur Steuerung der Brennkraftmaschine 2 an das Motorsteuergerät 11 überträgt.

Der zumindest eine Sensor 7 zur Erfassung einer physikalischen und/oder chemischen Messgröße der Brennkraftmaschine 2 und/oder an einer Motorkomponente 13 der Brennkraftmaschine 2 kann dabei insbesondere in einem Kolben, einem Pleuel, einem Ventil, einem Motorblock, insbesondere einer Zylinderwand des Motorblocks, einem Lager, insbesondere einem Pleuellager, einer Nockenwelle oder einer Kurbelwelle der Brennkraftmaschine 2 angeordnet sein. Bereits diese nicht abschließende Aufzählung lässt die mannigfaltigen Anordnungsmöglichkeiten des zumindest einen Sensors 7 bzw. der Sensoren 7 erkennen, wodurch eine vorzugsweise vollständige Überwachung der Brennkraftmaschine 2 hinsichtlich dort auftretender und maßgeblicher Messgrößen möglich ist. Der zumindest eine Sensor 7 ist dabei zur Erfassung einer Temperatur, einer Position eines Bauteils, einer Kraft und/oder eines Drucks ausgebildet, aber rein theoretisch alternativ auch in der Lage, chemische Zusammensetzungen zu analysieren und ein hieraus resultierendes Analyseergebnis an den Mikrocontroller 8, beispielsweise einen Prozessor, zu übertragen.

Betrachtet man das Energieerntemodul 4 gemäß den Fig. 1 und 2, so besteht diese im Wesentlichen aus dem Energieumwandler 5 und dem Energiemodul 6, wobei der Energieumwandler 5 beispielsweise zur Umwandlung von Temperatur, Vibrationen, Strömungen, insbesondere Luftströmungen, und/oder Drücken in elektrische Energie ausgebildet ist. Hierdurch ist es möglich, ohnehin an der Brennkraftmaschine 2 oder an Motorkomponenten 13 vorhandene und von dieser/diesen abgegebene Energie, welche bislang ungenutzt in die Umgebung abgeführt bzw. abgegeben wird, erstmals für die elektrische Energiegewinnung zu nutzen und darüber sowohl den Mikrocontroller 8 als auch zumindest das Funkmodul 9 mit elektrischer Energie zu versorgen. In gleicher Weise ist selbstverständlich auch eine elektrische Energieversorgung zumindest einen Sensors 7 denkbar. Insbesondere kann ein derartiger Energieumwandler 5 beispielsweise als sogenanntes Peltierelement ausgebildet sein, welches eine Wärmedifferenz zur Stromerzeugung nutzt. Ein derartiges Peltierelement kann beispielsweise am Motorblock der Brennkraftmaschine 2, an einem Abgasstrang oder an einem Kühler angeordnet und die von diesem in die Umgebung abgestrahlte Energie zur Erzeugung elektrischer Energie nutzen. Da der Energieumwandler 5 unter Umständen, insbesondere sofern dieser Vibrationen und/oder Drücke in elektrische Energie umwandelt, keine gleichmäßige Energieversorgung bewirken kann, ist das Energiemodul 6 des Energieerntemoduls 4 vorzugsweise zur Glättung einer von dem zumindest einen Energieumwandler 5 empfangenen elektrischen Spannung ausgebildet. Das Energieerntemodul 4, das heißt der darin verbaute Energieumwandler 5 und das darin enthaltene Energiemodul 6 sowie der Mikrocontroller 8 und das Funkmodul 9 sowie die Sensoren 7 sind dabei drahtgebunden, ebenso wie das Motorsteuergerät 11 und die Brennkraftmaschine 2 bzw. das Motorsteuergerät 11 und der weitere Sensor 12 an der Brennkraftmaschine 2.

Generell wird die Brennkraftmaschine 2 mittels des erfindungsgemäßen Motorsteuersystems 1 dabei wie folgt gesteuert:
Während des Betriebs der Brennkraftmaschine 2 wandelt der zumindest eine Energieumwandler 5 des Energieerntemoduls 4 Wärme, Kraft, Vibrationen oder Ströme, insbesondere Luftströme, der Brennkraftmaschine 2 bzw. einer Motorkomponente 13 in elektrische Energie um und versorgt dadurch das Energiemodul 6 des Energieerntemoduls 4 mit elektrischer Energie. Hierbei wird vorzugsweise nicht direkt auf die Energie im Brennraum der Brennkraftmaschine 2 zugegriffen, sondern auf Bewegungsenergie oder thermische Energie von mit der Brennkraftmaschine 2 zusammenwirkenden Motorkomponenten 13. In dem Energiemodul 6 wird die vom Energieumwandler 5 erzeugte Spannung vorzugsweise geglättet, das heißt homogenisiert, damit eine möglichst kontinuierliche Spannungsversorgung für den Mikrocontroller 8 und das Funkmodul 9 zur Verfügung gestellt werden kann. In gleicher Weise ist es auch denkbar, dass der zumindest eine Sensor 7 sofern es dieser benötigt, mit einer geglätteten Spannung als elektrische Energie aus dem Energiemodul 6 versorgt wird. Der zumindest eine Sensor 7 erfasst dabei zumindest eine physikalische und/oder chemische Messgröße an oder in einer Komponente 13 der Brennkraftmaschine 2 und überträgt diese an den Mikrocontroller 8, der die erfasste Messgröße verarbeitet und an das Funkmodul 9 überträgt. Dies erfolgt vorzugsweise drahtgebunden. Die drahtgebundenen Strecken zwischen Energieerntemodul 4, Mikrocontroller 8, Sensor 7 und Funkmodul 9 sind dabei vorzugsweise sehr kurz, wobei sogar denkbar ist, dass diese Komponenten eine sehr kleine zusammenhängende Baueinheit bilden.

Das Funkmodul 9 überträgt nun die verarbeitete und von dem Mikrocontroller 8 empfangene Messgröße drahtlos, das heißt beispielsweise mittels Funk, an einen extern angeordneten Funkempfänger 10, der das Funksignal empfängt und die darin enthaltene Messgröße an das Motorsteuergerät 11 weiterleitet. In diesem Motorsteuergerät 11 wird die Messgröße ausgewertet, verarbeitet und anschließend die Brennkraftmaschine 2 in Abhängigkeit der ausgewerteten Messgröße gesteuert. Eine Steuerung der Brennkraftmaschine 2 kann dabei selbstverständlich nicht nur in Abhängigkeit der von den Sensoren 7 erfassten Messgrößen erfolgen, sondern es können auch weitere Sensoren 12 direkt an der Brennkraftmaschine 2 angebunden sein, die jedoch drahtgebunden mit dem Motorsteuergerät 11 verbunden sind, wie dies gemäß den Fig. 1 und 2 zu erkennen ist.

Generell sind dabei die Sensoren 7 bzw. der zumindest eine Sensor 7 in der Lage, interne Messgrößen der Brennkraftmaschine 2 zu erfassen, wie beispielsweise Lagerdrücke und -temperaturen, Pleuelstangenkräfte, Zylinderdrücke, Temperaturen, etc.. Der Sensor 7 kann auch als Klopfsensor ausgebildet sein. Insbesondere durch ein Erfassen der Kräfte in den Pleuelstangen ergibt sich dabei eine Einwirkungsmöglichkeit auf eine Synchronisation der Verbrennung in der Brennkraftmaschine 2. Die Kräfte können dabei an allen Zylindern gemessen und z.B. die Einspritzmenge danach angepasst werden.

Vorzugsweise erfolgt dabei die Signalauswertung zumindest großen Teils, vorzugsweise sogar gänzlich im Mikrocontroller 8, der von dem Energieerntemodul 4 mit elektrischer Energie versorgt wird, wodurch eine vergleichsweise energieintensive Datenübertragung über die Funkstrecke zwischen dem Funkmodul 9 und dem extern angeordneten Funkempfänger 10 vorzugsweise nur temporär und kurz aufgebaut werden muss. Durch den energieautarken Betrieb der Sensoren 7, des Mikrocontrollers 8 und des Funkmoduls 9 können diese auch an bislang nicht oder nur schwer zu verkabelnde Stellen angeordnet werden.

Mit dem erfindungsgemäßen Verfahren lässt sich insbesondere eine Vorentflammung detektieren, beispielsweise durch Sensoren 7, die eine Temperatur und/oder einen Druck erfassen, und entsprechende Maßnahmen, beispielsweise eine entsprechende Kraftstoffeinspritzung oder ähnliches zur Kühlung oder eine Gemischänderung einleiten.

Generell ist es mit dem erfindungsgemäßen Motorsteuersystem 1 und der erfindungsgemäßen Brennkraftmaschine 2 sowie mit dem erfindungsgemäßen Verfahren möglich, bei einer drahtlosen Datenübertragung Einschränkungen durch kabelgebundene Stromversorgungen oder Batterien zu vermeiden. Das erfindungsgemäße Motorsteuersystem 1 nutzt dabei über die Energieumwandler 5 der jeweiligen Energieerntemodule 4 erstmals ohnehin an der Brennkraftmaschine 2 vorhandene und von dieser bislang nutzlos in die Umgebung abgegebene Energie. Hierdurch lässt sich auch der Wirkungsgrad (zumindest geringfügig) der erfindungsgemäßen Brennkraftmaschine 2 verbessern und insbesondere auch zumindest indirekt eine Reduzierung der Schadstoffemissionen durch einen geringeren Kraftstoffverbrauch erreichen, der einerseits durch die Nutzung bislang nicht genutzter Energiequellen resultiert und anderseits durch eine deutlich verbesserte Motorsteuerung durch ein deutlich genaueres Abgreifen von physikalischen und/oder chemischen Messgrößen, insbesondere im Verbrennungsprozess,.

Generell ist es mit dem erfindungsgemäßen Motorsteuersystem 1 und der erfindungsgemäßen Brennkraftmaschine 2 sowie mit dem erfindungsgemäßen Verfahren darüber hinaus möglich, die Brennkraftmaschine 2 zu regeln, insbesondere sofern das Motorsteuergerät 11 als Motorregelgerät ausgebildet ist. Beispielsweise kann der Sensor 7 als Klopfsensor, das heißt also als Körperschallsensor, ausgebildet sein, dessen Signal mit Hilfe von elektronischen Filtern und dem Mikrocontroller 8 auf die für das Klopfen typischen hochfrequenten Schwingungsanteile untersucht wird. Werden derartige Signale erfasst, könnte über das Motorsteuergerät/Motorregelgerät 11 eine entsprechende Steuerung/Regelung der Brennkraftmaschine 2 erfolgen.

## Patentansprüche

1. Motorsteuersystem (1) für eine Brennkraftmaschine (2),
**dadurch gekennzeichnet, dass**
dass das Motorsteuersystem (1) zumindest folgende Komponenten aufweist,
- zumindest ein Energieerntemodul (4) mit zumindest einem Energieumwandler (5) und zumindest einem Energiemodul (6),
- zumindest einen Sensor (7) zum Erfassen einer physikalischen oder chemischen Messgröße an oder in einer Komponente (13) der Brennkraftmaschine (2), einen Mikrocontroller (8) zum Verarbeiten der erfassten Messgröße und ein Funkmodul (9) zur drahtlosen Übertragung der von dem Mikrocontroller (8) verarbeiteten Messgröße an einen Funkempfänger (10),
- wobei der Mikrocontroller (8) mit dem Sensor (7) und dem Funkmodul (9) kommunizierend verbunden ist und wobei das Energiemodul (6) zur Übertragung von elektrischer Energie zumindest mit dem Mikrocontroller (8) und dem Funkmodul (9) verbunden ist,
- ein Motorsteuergerät (11), das mit dem Funkempfänger (10) kommunizierend verbunden und derart ausgebildet ist, dass es vom Funkempfänger (10) eingehende Messgrößen auswertet, zu Steuersignalen verarbeitet und diese zum Schutz der Motorkomponenten (13) an die Brennkraftmaschine (2) überträgt.

2. Motorsteuersystem nach Anspruch 1,
**dadurch gekennzeichnet,**
**dass** der zumindest eine Sensor (7) in einem Kolben, einem Pleuel, einem Ventil, einem Motorblock, insbesondere in einer Zylinderwand, einem Lager, insbesondere einem Pleuellager, einer Nockenwelle oder einer Kurbelwelle der Brennkraftmaschine (2) angeordnet ist.

3. Motorsteuersystem nach Anspruch 1 oder 2,
**dadurch gekennzeichnet,**
**dass** der zumindest eine Sensor (7) zur Erfassung einer Temperatur, einer Kraft und/oder eines Drucks ausgebildet ist.

4. Motorsteuersystem nach einem der vorhergehenden Ansprüche,
**dadurch gekennzeichnet,**
**dass** das Energiemodul (6) zur Glättung einer von dem zumindest einen Energieumwandler (5) empfangenen elektrischen Spannung ausgebildet ist.

5. Motorsteuersystem nach einem der vorhergehenden Ansprüche,
**dadurch gekennzeichnet,**
**dass** der Energieumwandler (5) zur Umwandlung von Temperatur, Vibrationen, Strömungen, insbesondere Luftströmungen, und/oder Druck in elektrische Energie ausgebildet ist.

6. Motorsteuersystem nach einem der vorhergehenden Ansprüche,
**dadurch gekennzeichnet,**
- **dass** der Sensor (7), der Energieumwandler (5), das Energiemodul (6), der Mikrocontroller (8) und das Funkmodul (9) drahtgebunden sind, und/oder
- **dass** das Motorsteuergerät (11) und der Funkempfänger (10) drahtgebunden sind.

7. Brennkraftmaschine (2) mit einem Motorsteuersystem (1) nach einem der vorhergehenden Ansprüche.

8. Verfahren zur Steuerung einer Brennkraftmaschine (2) nach Anspruch 7 mit einem Motorsteuersystem (1) nach einem der Ansprüche 1 bis 6, bei dem
- zumindest ein Energieumwandler (5) eines Energieerntemoduls (4) Wärme, Kraft, Vibrationen oder Ströme, insbesondere Luftströme, der Brennkraftmaschine (2) in elektrische Energie umwandelt und an ein Energiemodul (6) des Energieerntemoduls (4) überträgt, das einen Mikrocontroller (8) und ein Funkmodul (9) mit elektrischer Energie versorgt,
- zumindest ein Sensor (7) eine physikalische oder chemische Messgröße an oder in einer Motorkomponente (13) der Brennkraftmaschine (2) erfasst und an den Mikrocontroller (8) überträgt, der die erfasste Messgröße verarbeitet und an das Funkmodul (9) überträgt,
- das Funkmodul (9) die verarbeitete Messgröße drahtlos an einen Funkempfänger (10) überträgt, der die Messgröße an ein Motorsteuergerät (11) weiterleitet,
- das Motorsteuergerät (11) die Messgröße auswertet, verarbeitet und in Abhängigkeit der Messgröße ein Steuersignal zum Schutz der Motorkomponenten (13) an die Brennkraftmaschine (2) übermittelt.

9. Verfahren nach Anspruch 8,
**dadurch gekennzeichnet,**
**dass** der zumindest eine Sensor (7) eine Temperatur, eine Kraft und/oder einen Druck erfasst.

10. Motorsteuersystem nach Anspruch 8 oder 9,
**dadurch gekennzeichnet,**
**dass** das Energiemodul (6) die vom Energieumwandler (5) empfangene elektrische Energie homogenisiert, insbesondere eine elektrische Spannung glättet.
